(19) Europäisches Patentamt
European Patent Office
Office européen des brevets

(11) **EP 2 099 187 B1**

(12) **EUROPEAN PATENT SPECIFICATION**

(45) Date of publication and mention
of the grant of the patent:
**25.05.2011  Bulletin 2011/21**

(51) Int Cl.:
***H04L 27/26*** *(2006.01)*

(21) Application number: **08152450.6**

(22) Date of filing: **07.03.2008**

(54) **Wireless system using a new type of preamble for a burst frame**

Funksystem mit neuartiger Präambel für einen Burst-Rahmen

Système sans fil utilisant un nouveau type de préambule pour trame de rafale

(84) Designated Contracting States:
**GB**

(43) Date of publication of application:
**09.09.2009  Bulletin 2009/37**

(73) Proprietor: **Sony Corporation**
**Tokyo 108-0075 (JP)**

(72) Inventors:
• **Wang, Zhaocheng**
**70327, Stuttgart (DE)**

• **Uno, Masahiro**
**70327, Stuttgart (DE)**

(74) Representative: **Keck, Stephan et al**
**Witte, Weller & Partner**
**Patentanwälte**
**Königstraße 5**
**70173 Stuttgart (DE)**

(56) References cited:
**WO-A-2007/055469      US-A1- 2006 140 293**
**US-A1- 2007 195 914**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of Invention**

The present invention relates to the field of wireless communication, in particular to a new type of preamble for burst frame timing and peak-distance detection.

**State of the Art**

For example for high rate indoor wireless systems beyond 1 Gbps, the wireless channel delay spread might be over tens of symbols, which makes conventional adaptive equalizers including linear, decision feedback or maximum likelihood sequence estimation (MLSE) equalizer unrealistic.

- The adaptive linear equalizer including either linear or decision feedback equalizer is difficult to converge with short training period because of many of the taps for covering the wireless channel delay spread, which is over tens of symbols.
- The complexity of maximum likelihood sequence estimation (MLSE) or of a Viterbi equalizer grows exponentially with the number of symbols included in a wireless channel delay spread and becomes extremely complex when a wireless channel delay spread is over tens of symbols.

A conventional single carrier wireless system with a frequency domain equalizer uses a cyclic prefix for carrier synchronization and a burst preamble for frame synchronization and coarse timing synchronization. Normally the channel estimation is realized by introducing an additional pilot frame and the frame adopts a constant amplitude zero auto-correlation sequence (CAZAC).

Document [US-2006/0140293] discloses a method for detecting a signal and for estimating symbol timing. The method is applicable to a receiver in an OFDM system. The method uses the autocorrelation of the short preamble of input signals to detect signals and performs the coarse frequency offset compensation at the same time. The method aims at improving the accuracy for the symbol timing.

Document [US 2007/0195914] discloses a synchronization apparatus and method for improving timing estimation performance in an OFDM-FDMA/CDMA/TDMA system, which aims at estimating symbol timing through a more correct timing metric using a guard interval of a preamble.

The disadvantages of the state of the art technology for single carrier wireless systems using frequency domain equalizer are as follows:

- A long burst preamble is used for packet/burst frame detection, automatic gain control, coarse timing synchronization and coarse frequency synchronization.

However, only a rough timing for a FFT block can be obtained due to a flatness of the autocorrelation peak and the effect of noise.

- Additional circuits have to be used for packet/burst frame detection, automatic gain control, coarse timing synchronization and coarse frequency synchronization.

**Summary of the Invention**

The present invention relates to a method for generating a wireless communication signal, whereby said communication signal is based on a temporal frame structure with burst frames, each burst frame comprising at least one combination of a guard interval and a data frame, said method comprising the step of inserting a preamble before a first of said at least one combination, said preamble and said guard interval each comprising at least one pseudorandom-noise, PN, sequence, whereby said at least one PN sequence of the guard interval is identical to said at least one PN sequence of the preamble.

Favourably, said preamble comprises a plurality of PN sequences.

Favourably, at least one PN sequence of said plurality of PN sequences of said preamble is inverted in relation to the other PN sequences of said preamble. Favourably, at least two adjacent PN sequences of said plurality of PN sequences of said preamble are arranged with a distance to each other, wherein control information is encoded in said distance.

Favourably, said at least one PN sequence is a maximum length sequence. Favourably, said wireless communication signal is a single carrier or a multi carrier communication signal.

The present invention also relates to a signal generator operable to generate a wireless communication signal, whereby said communication signal is based on a temporal frame structure with burst frames, each burst frame comprising at least one combination of a guard interval and a data frame, said generator comprising a preamble insertion module operable to insert a preamble before a first of said at least one combination, said preamble and said guard interval comprising at least one pseudorandom-noise, PN, sequence, whereby said at least one PN sequence of the guard interval is identical to said at least one PN sequence of the preamble.

Favourably, said preamble comprises a plurality of PN sequences.

Favourably, at least one PN sequence of said plurality of PN sequences of said preamble is inverted in relation to the other PN sequences of said preamble Favourably, at least two adjacent PN sequences of said plurality of PN sequences of said preamble are arranged with a distance to each other, wherein control information is encoded in said distance.

Favourably, said at least one PN sequence is a maximum length sequence. Favourably, said wireless communication signal is a single carrier or a multi carrier communication signal.

The present invention further relates to a method for processing a received wireless communication signal, whereby said communication signal is based on a temporal frame structure with burst frames, each burst frame comprising at least one combination of a guard interval and a data frame and a preamble preceding said combination, said preamble and said guard interval comprising at least one pseudorandom-noise, PN, sequence, said method comprising the steps of correlating said at least one PN sequence of the preamble, and outputting a correlation function, whereby said at least one PN sequence (40a) of the guard interval (44a) is identical to said at least one PN sequence (111) of the preamble (100).

Advantageously, said correlation function from said at least one PN sequence of said preamble is used to perform burst frame detection, automatic gain control, coarse timing synchronization and/or coarse frequency synchronisation of said wireless communication signal. Further advantageously, said guard interval comprises at least one PN sequence, said at least one PN sequence being identical to or inverted in relation to said at least one PN sequence of said preamble, whereby said at least one PN sequence of the guard interval is correlated in order to obtain a correlation function, whereby said correlation function is used to perform channel estimation and/or equalization of said carrier wireless communication signal.

Further advantageously, the method comprises the detection of a correlation peak in said correlation function(s).

Further advantageously, said burst frame comprises at least two guard intervals with respective PN sequences and at least two PN sequences in said preamble, whereby timing information is detected from the correlation functions of said at least two PN sequences of the preamble and correlation functions of the PN sequences of the guard intervals.

Further advantageously, a predetermined time duration between the correlation functions of said at least two PN sequences of the preamble identifies the presence of a preamble. Hereby, the preamble can be identified easily on the basis of the time duration between the correlation functions, particularly if the time duration between the correlation functions of the PN sequences of the guard intervals is different. Further advantageously, a predetermined time duration between the correlation functions of said PN sequences of the guard intervals identifies the presence of a data frame. Hereby, the data frames can be identified easily on the basis of the time duration between the correlation functions, particularly if the time duration between the correlation functions of the PN sequences of the preamble is different.

Further advantageously, said preamble comprises a plurality of PN sequences, wherein a detection of a variation in time durations between the correlation functions of said PN sequences of the preamble is performed in order to obtain control information. Thus, if the some of the PN sequences of the preamble have a different distance from each other as compared to other PN sequences of the preamble, this variation could contain encoded control information, which could be decoded and used on the receiver side.

The present invention further relates to a signal processor operable to process a received single carrier wireless communication signal, whereby said communication signal is based on a temporal frame structure with burst frames, each burst frame comprising at least one combination of a guard interval and a data frame and a preamble preceding said combination, said preamble and said guard interval comprising at least one pseudorandom-noise, PN, sequence said processor comprising a correlation module operable to correlate at least a part of said at least one PN sequence of the preamble and to output a correlation function, whereby said at least one PN sequence (40a) of the guard interval (44a) is identical to said at least one PN sequence (111) of the preamble (100).

Advantageously, said signal processor is operable to use said correlation function from said at least one PN sequence of said preamble to perform burst frame detection, automatic gain control, coarse timing synchronization and/or coarse frequency synchronisation of said wireless communication signal. Further advantageously, said guard interval comprises at least one PN sequence, said at least one PN sequence being identical to or inverted in relation to said at least one PN sequence of said preamble, whereby said correlation module is operable to correlate said at least one PN sequence of the guard interval in order to obtain a correlation function, whereby said signal processor is operable to use said correlation function to perform channel estimation and/or equalization of said carrier wireless communication signal.

Further advantageously, said signal processor comprises a detection module operable to detect a correlation peak in said correlation function(s).

Further advantageously, said burst frame comprises at least two guard intervals with respective PN sequences and at least two PN sequences in said preamble, whereby said signal processor is operable to detect timing information from the correlation functions of said at least two PN sequences of the preamble and correlation functions of the PN sequences of the guard intervals.

Further advantageously, a predetermined time duration between the correlation functions of said at least two PN sequences of the preamble identifies the presence of a preamble.

Further advantageously, a predetermined time duration between the correlation functions of said PN sequences of the guard intervals identifies the presence of a data frame.

Further advantageously, said preamble comprises a plurality of PN sequences, wherein said signal processor is operable to perform a detection of a variation in time durations between the correlation functions of said PN sequences of the preamble in order to obtain control information.

The present invention concentrates on the areas of multi carrier or single carrier wireless systems with a frequency domain equalizer and simultaneously provides a coarse frame timing, a carrier synchronization and a channel estimation without an additional overhead.

## Description of the Drawings

The features, objects and advantages of the present invention will become more apparent from the detailed description set forth below when taken in conjunction with the drawings, wherein:

Figure 1 shows an example of a frame structure of an OFDM system or single carrier system using a frequency domain equalizer,

Figure 2 shows an example of a block diagram of an OFDM system,

Figure 3 shows an example of a block diagram of a single carrier system using a frequency domain equalizer,

Figure 4 shows an example of a frame structure using PN sequences,

Figure 5 shows an example of a burst frame comprising a burst preamble and a frame structure,

Figure 6 shows a detailed view of a state of the art example of a burst preamble,

Figure 7 shows another detailed view of a state of the art example of a burst preamble with a succeeding frame structure,

Figure 8 shows another example of a burst frame,

Figure 9 shows another example of a burst frame,

Figure 10 shows a further example of a burst frame,

Figure 11 shows another example of a frame structure using PN sequences as well as an example of the coarse frame timing and the carrier synchronization based on the auto-correlation peak of a PN sequence,

Figure 12 shows an example of an apparatus for a channel equalization based on a Fast Fourier Transformation (FFT),

Figure 13 shows an example of an apparatus for a channel equalization based on a Discrete Fourier Transformation (DFT), and

Figure 14 shows an example of a frame structure with an additional guard interval.

## Detailed Description of the Invention

The present invention relates to a multi or single carrier wireless communication system with a frequency domain equalization, whereby at least one PN sequence is used and/or inserted in a preamble of a frame, burst, packet or the like of a transmitter signal; thus the PN sequence, favourably having a high correlation peak and a low correlation sidelobe, is used to indicate the beginning of a burst frame and for automatic gain control, coarse frame timing, time and/or frequency synchronization and the like in a receiver, whereby each burst frame is composed of at least one or a plurality of data blocks.

Throughout the invention the term "PN sequence" can be replaced by the term "M sequence", whereby a M sequence is a special case of a PN sequence as explained in detail further below. In addition at least one characteristic of a M sequence can correspond to at least one characteristic of a PN sequence.

In the following, the term burst frame will be used to describe the fact that the wireless signal is based on a temporal structure in which data, information etc. is transmitted in packets, frames, data bursts or the like.

According to the invention, at least one PN sequence is also used in a guard interval between or favourably as cyclic prefix of data frames of the frame, burst, packet etc. Hereby, the PN sequence can be used for coarse FFT block timing, carrier synchronization and/or channel estimation on the receiver side. When a PN sequence is used in a guard interval for channel estimation and equalization, the same complex (I/Q) matched filter for the PN sequence which is anyway required in the receiver can be also used to detect the position of and the distance between two consecutive correlation peaks to differentiate the timing of each FFT block and the timing of the burst frame.

The advantages of the proposed new burst frame structure are low complexity and low overhead; thus, there is no need for additional circuits for packet/burst frame detection in the receiver, and the proposed burst preamble for the burst frame can be shorter than the one of the state of the art.

For example, for high rate indoor wireless systems beyond 1Gbps, the wireless channel delay spread might be over tens of symbols, which makes a conventional linear equalizer, a decision feedback equalizer and a maximum likelihood sequence estimation (MLSE) equalizer unrealistic.

One possible solution is to adopt an orthogonal frequency division multiplexing (OFDM) technique, which is an example of a multi-carrier wireless communication technique. The main advantage of OFDM is the low complexity frequency domain equalization. This is achieved with the introduction of a guard interval or a cyclic prefix between data frames, which enables the receiver to cope with time dispersive channels, as long as the channel impulse response is shorter than the cyclic prefix.

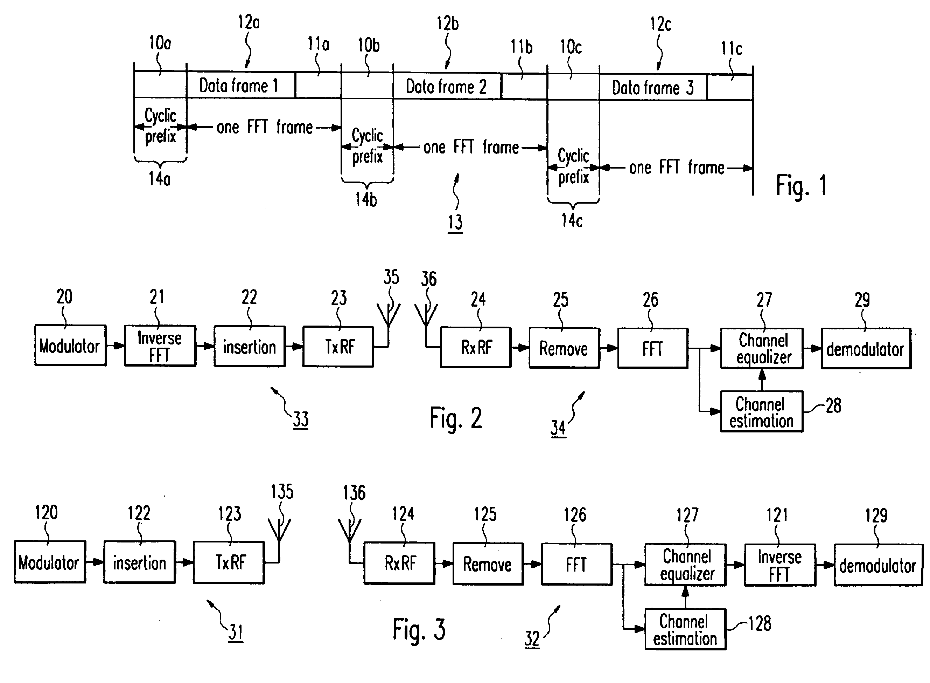

A similar approach using frequency domain equalization can be adopted for single carrier wireless systems. Here time domain guard intervals and/or cyclic prefixes inserted between data frames (cf. Figure 1) are used to cope with the multi-path fading channels and to suppress inter-frame interference if the channel impulse response is shorter than the cyclic prefix. A single carrier wireless system with a frequency domain equalizer may also use such a cyclic prefix for frequency synchronization. When a PN sequence is used in or as a guard interval between data frames instead of a cyclic prefix, the correlation peak (auto- or cross-correlation peak) of the PN sequence can be used for channel estimation and equalization and/or carrier synchronisation in the receiver.

For single carrier systems with a frequency domain equalizer, an additional burst preamble is usually added for packet/burst frame detection, automatic gain control, coarse timing synchronization and/or coarse frequency synchronization and the like in the receiver.

The present invention is directed to a single or multi carrier system with a frequency domain equalizer, whereby at least one PN sequence is used in a guard interval, and whereby the identical PN sequence is used in the burst preamble to indicate the beginning of a burst frame. The term "identical" is intended to include that one of the PN sequences has the same real value but is inverted in relation to the other PN sequence.

As mentioned, the guard interval allows the receiver to cope with a time dispersive multi-path fading channel, as long as the channel impulse response is shorter than the time duration of the guard interval. Otherwise there might be an inter-frame interference. The channel estimation accuracy can be improved using consecutive PN sequences in the preamble. In the following the basics of a PN sequence and a M sequence, as used in the present invention, as well as their characteristics are explained in more detail.

Generally speaking, a signal comprising a message unknown to a receiver has a random nature and is called a stochastic signal. In case the signal would not have a random nature, the receiver would be capable to reconstruct the message from the already sent signal due to the deterministic nature of the signal. That means, that the signal with a deterministic nature can be periodic, so that the value of the signal can be predicted.

Regarding specific definitions, a signal of deterministic nature is a signal, which has a value x as a real number for every time t. A signal of stochastic nature is a signal, which has a random number y for every time t, whereby said number y can be presented in a probability density function. The generation and the characteristics of said sequences are known to a person skilled in the art.

An ideal auto-correlation function is defined as:

$$E\left\{c_i c_{i+j}\right\} = \begin{cases} 1 & j = 0 \\ 0 & j \neq 0 \end{cases}$$

A non-ideal auto-correlation function comprises several values more, whereby an almost ideal auto-correlation function of a periodic consecutive function comprises distinct high auto-correlation peaks and a constant low auto-correlation value and a non-ideal auto-correlation function comprises less distinct high auto-correlation peaks and noisy low auto-correlation values.

A PN sequence is a pseudo-random noise signal, which displays some deterministic features like periodic behaviour. A periodic cycle within the sequence can recur at least once. In case that the periodic cycle is as long as the PN sequence, meaning exactly one period cycle is available, said sequence is also called a M sequence, standing for "maximum length sequence". These sequences are pseudo-random number sequences and are known by a person skilled in the art.

The main advantages of the present invention are that:

- A PN sequence with a good correlation peak, e.g. auto-correlation peak, and a small (auto-)correlation side-lobe is used at least once in a preamble of a data burst and in a guard interval between data frames of the data burst. Compared with conventional single carrier wireless systems with frequency domain equalization, the overhead introduced by the guard interval does not change. Since the PN sequence will be used for coarse frame timing and channel estimation, there is no need for additional pilot frames. The total overhead is thus reduced.
- A reliable carrier synchronization can be achieved using an auto-correlation peak of the PN sequence instead of a conventional cyclic prefix, which is sensitive to a channel impulse response.
- A reliable coarse timing can be achieved using a PN sequence instead of an additional pilot frame.
- Reliable channel estimation can be achieved using the auto-correlation peak of a PN sequence.
- A MMSE (minimum mean square error) channel equalization can be achieved to improve the performance using the auto-correlation side-lobe information of a PN sequence.
- The channel estimation accuracy can be further improved using the consecutive PN sequences.
- When a PN sequence with a good auto-correlation peak and a small auto-correlation sidelobe is used for a cyclic prefix, channel estimation and equalization, the same matched filter circuits in the receiver are re-used for packet/burst frame detection, automatic gain control, coarse timing synchronization and coarse frequency synchronization. No additional circuits are required.
- The proposed burst preamble, whereby the concatenated identical M sequences or the other PN sequences used for a channel estimation are adopted and a distance detection between the concatenated correlation peaks enable the low overhead burst preamble for burst frame based transmission systems.

Figure 1 shows a general example of a frame structure 13 of a single carrier system (or an OFDM system) using a frequency domain equalizer.

One key principle of OFDM is that since low symbol rate modulation schemes (i.e. where the symbols are relatively long compared to the channel time characteristics) suffer less from intersymbol interference caused by multipath, it is advantageous to transmit a number of low-rate streams in parallel instead of a single high-rate stream. Since the duration of each symbol is long, it is feasible to insert a guard interval between the OFDM symbols, thus eliminating the intersymbol interference. The guard-interval also reduces the sensitivity to time synchronization problems.

An example of a frame structure 13 of a single or multi carrier system is shown in Figure 1 in the time domain and comprises three cyclic prefixes 10a, 10b, 10c and three data frames 12a, 12b, 12c. The basic frame structure comprises one cyclic prefix 10a and one data frame 12a and can be chained successively with other basic frame structures. The cyclic prefixes 10a, 1b, 10c are embedded in the guard intervals 14a, 14b, 14c, respectively. At the chronological end of the respective data frames 12a, 12b, 12c, a respective end 11a, 11b, 11c is designated, said ends 11a, 11b, 11c being part of the respective data frames 12a, 12b, 12c.

In OFDM, a data frame is processed by a FFT (Fast Fourier Transformation), whereby the FFT window is as long as the data frame, said FFT window determining the time when said data is being processed by the system and/or the size of the data to be transformed by FFT step by step or at once. In an OFDM symbol the cyclic prefix 10a is a repetition of the end of the symbol 11a whereby said cyclic prefix 10a is placed at the beginning of said data frame 12a. So the cyclic prefix 11a is equal to 10a, 11b is equal to 10b and 11c is equal to 10c.

Figure 2 shows an example of a block diagram of an OFDM system comprising a transmitter 33 and a receiver 34, which can be embodied according to the present invention, whereby said transmitter 33 is operable to modulate and transmit electromagnetic waves which are orthogonal frequency division multiplexed, eventually. Said receiver 34 is operable to receive electromagnetic waves and also demodulate said waves which are orthogonal frequency division multiplexed. Said OFDM system is operable to establish a wireless connection and exchange data between its transmitter 33 and its receiver 34.

The transmitter 33 comprises a modulator 20, e.g. a quadrature amplitude modulation (QAM) modulator, an Inverse Fast Fourier Transformation (FFT) module 21, a insertion module 22, a Radio frequency transmitter 23 and an antenna 35. The modulator 20 is connected to the Inverse FFT module 21, the Inverse FFT module 21 is connected to the insertion module 22, the insertion module 22 is connected to the Radio frequency transmitter 23 and the Radio frequency transmitter 23 is connected to the antenna 35.

First an input signal to be modulated and transmitted is sent to the modulator 20.
The modulator 20 is operable to modulate an input signal according to the respective modulation scheme, e.g. QAM. The Inverse FFT module 21 is operable to apply an inverse FFT transformation on the signal received from the modulator 20. The insertion module 22 is operable to insert PN sequences into preambles of data bursts as well as PN sequences as guard intervals in between data frames of data bursts according to the present invention as explained in further detail below into the signal received from the Inverse FFT module 21. The Radio frequency transmitter 23 is operable to convert the signal received from the insertion module 22 into a signal which is transmittable by the antenna 35, said antenna 35 being operable to transmit electromagnetic waves carrying data based on said input signal.

The receiver 34 comprises an antenna 36, a Radio frequency receiver 24, a Remove module 25, a FFT module 26, a Channel equalizer 27, a Channel estimation module 28 and a demodulator 29, e.g. a QAM demodulator. The antenna 36 is connected to the Radio frequency receiver 24, the Radio frequency receiver 24 is connected to the Remove cyclic prefix module 25, the Remove module 25 is connected to the FFT module 26, the FFT module 26 is connected to both the Channel equalizer 27 and the Channel estimation module 28, the Channel estimation module 28 is additionally connected to the Channel equalizer 27 and the Channel equalizer 27 is eventually connected to the demodulator 29.
Finally an output signal sent out by the demodulator 29 can now be further processed.

The antenna 36 is operable to receive the signal sent by the antenna 35 and convert said electromagnetic signal into an electric signal. The Radio frequency receiver 24 is operable to receive the electric signal from the antenna 36 and convert said signal into a baseband signal. The Remove module 25 is operable to receive the signal from the Radio frequency receiver 24 and detect and remove the preamble of a received data burst in order to enable frequency and time synchronization, frequency estimation and so forth as well as operable to remove the PN sequences comprised in the guard intervals between data frames for further processing as required by the present invention as explained in further detail below. The FFT module 26 is operable to transform the signal received from the Remove module 25 according to a Fast Fourier Transformation. The Channel estimation module 28 is operable to receive the signal from the FFT module 26 and estimate the channel quality and other characteristics based on the channel, said channel corresponding to the wireless connection between the transmitter and the receiver. The channel quality might also describe the background and/or receiver noise. The Channel equalizer 27 is operable to receive one signal sent by the FFT module 26 and one signal sent by the Channel estimation module 28. Then the Channel equalizer 27 compensates for the dynamic frequency response of the wireless channel. The demodulator 29 is operable to demodulate the signal sent by the Channel equalizer 27 and output a demodulated output signal.

Fig. 3 shows an example of a block diagram of a transmitter 31 and a receiver 32 of a single carrier system using a frequency domain equalizer according to the present invention.

The transmitter 31 is operable to modulate and transmit electromagnetic waves which are modulated onto a single carrier. The receiver 32 is operable to receive electromagnetic waves as transmitted from the transmitter 31 and to demodulate received waves which were modulated onto a single carrier. Obviously, the transmitter 31 and the receiver 32 are adapted to establish a wireless connection and to exchange data and control information.

The transmitter 31 comprises a modulator 120, which is for example a quadrature amplitude modulation (QAM) modulator or any other suitable modulator, which is adapted to modulate an input signal according to the implemented modulation scheme. The modulated signals are forwarded to an insertion module 122, which is operable to insert PN sequences into preambles of data bursts as well as PN sequences as guard intervals in between data frames of data bursts according to the present invention as explained in further detail below. Therefore generated data bursts, data packets or the like are then forwarded to a radio frequency transmitter 123 which is operable to transform the data bursts into radio frequency signals which are then transmitted via an antenna 135.

The receiver 32 comprises an antenna 136 adapted to receive the signals transmitted from the transmitter 31. The received signals are then converted by a radio frequency receiver 124 into the base band signal and forwarded to a remove module 125 which is operable to detect and remove the preamble of a received data burst in order to enable frequency and time synchronization, frequency estimation and so forth as well as operable to remove the PN sequences being part of the preamble and/or of the guard intervals between data frames for further processing as required by the present invention as explained in further detail below.

Before being removed, the PN sequences of the preamble are correlated in the receiver 32 with an identical or a similar PN sequence to execute the tasks of the receiver 32 mentioned above based on the outputted correlation function.

The data frames without the preambles and the guard intervals are then forwarded to a fast Fourier transformation module 126 and transformed from the time domain into the frequency domain. The frequency domain signals are then forwarded to a channel equalizer 127 as well as to a channel estimation module 128. The channel estimation module 128 is operable to estimate the channel quality and other channel characteristics. The channel equalizer is adapted to receive a corresponding information from the channel estimation module 128 and is operable to compensate the received signals for the dynamic frequency response of the wireless channel. The compensated signal is then forwarded to an inverse fast Fourier transformation module 121 which transforms the signal back to the time-domain and forwards the time domain signal to a demodulator which demodulates the signal in correspondence to the modulation scheme used in the modulator 120 of the transmitter 31. For example, the demodulator 129 is a quadrature amplitude modulation demodulator or any other suitable demodulator.

It has to be understood, that the insertion of PN sequences into the guard intervals and into the preamble of a data burst can be implemented in separate modules instead of the one insertion module 21 and 122 of the transmitters 33 and 31, respectively. Similarly, instead of one remove module 25 and 125 of the receivers 34 and 32, respectively, separate modules can be implemented in the receivers 34 and 32 in order to remove the PN sequences from the guard intervals as well as the preamble.

The receivers 34 and 32, respectively, and the transmitters 33 and 31, respectively, could be part of a mobile wireless device, like e.g. a cell phone, a pda, a notebook, an electronic organizer and so on. Moreover the receivers 34 and 32, respectively, and the transmitters 33 and 31, respectively, might be integrated in a semiconductor chip and comprise additional modules operable to extend the operability of the said receiver and/or transmitter, which are not shown in the Figures 2 and 3 for the sake of clarity. Furthermore, the modules can be realized by respective external and separate devices, which can be connected via wires.

When compared with an OFDM system, the main advantages of single carrier wireless systems with a frequency domain equalizer of the present invention can be summarized as follows

- The energy of individual symbols is transmitted over the whole available frequency spectrum. Therefore, narrow band notches within the channel transfer function have only small impact on the performance. For OFDM systems, narrow band notches would degrade the performance of transmitted symbols assigned over the relevant sub-carriers. Of course, the diversity can be regained partly by utilizing an error control decoder with some performance loss.

- A low peak to average ratio for the radiated signal, which makes the power amplifier (PA) from the transmitted side more efficient and cheaper, especially for the millimetre wave wireless systems.

- Robust to the effect of phase noise, which makes the local oscillator (LO) simpler, especially for the millimetre wave wireless systems.

- The number of analogue-digital-converter (ADC) bits for the receiver side can be reduced, which is critical for high rate communications because of the power consumption and chip size.

- The carrier frequency error between the transmitter side and the receiver side can destroy the orthogonality between subcarriers and introduce the inter-subcarrier interference for OFDM systems. However, it has no effect on single carrier systems with a frequency domain equalizer.

• It is more suitable for the user scenario, when the transmitter side would be simple or have low power consumption and the receiver side would be complex or have relatively high power consumption, like high definition television.

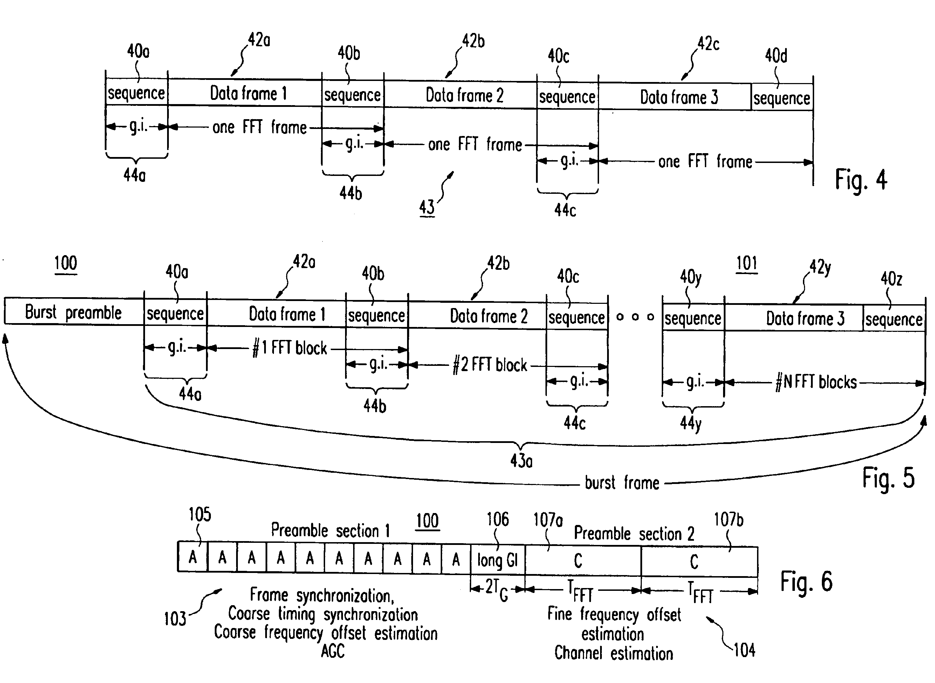

Figure 4 shows an example of the structure of a part of a burst frame 43 (or packet frame etc.) of the present invention.

This frame structure 43 comprises three PN sequences 40a, 40b, 40c and three data frames 42a, 42b, 42c and is shown in the time domain. Eventually each PN sequence is embedded in a respective guard interval 44a, 44b, 44c and completely fills out said interval, said guard intervals 44a, 44b, 44c being the respective time periods before the data frame periods 42a, 42b, 42c. All PN sequences 40a to 40c are favourably identical to each other.

In Figure 4, one data frame and one guard interval comprising at least one PN sequence, for example 42a + 40b, are processed by the FFT module 126 of the receiver 32 or the FFT module 26 of the receiver 34, whereby the FFT window (or FFT frame) is e.g. as long as the length of a data frame plus the length of a guard interval. The data frames 42a, 42b, 42c can have all the same length; this applies also to the PN sequences 40a, 40b, 40c. The frame structure is different from Figure 1; while in Fig. 1 only the data frame is processed by a FFT, in Fig. 4 the FFT processes at least a data frame and a PN sequence. Alternatively, the FFT window could have a different length. Since the PN sequence 40a is the same as the PN sequence 40b, based on the same principle regarding OFDM systems, the inter-frame interference introduced by the time disperse multi-path fading channel can be eliminated when the wireless channel delay is less then the length of PN sequence.

The PN sequence 40a, 40b, 40c also helps the receiver 34 or the receiver 32 to correctly place the FFT frames and indicates the beginning of the respective data frames 42a, 42b, 42c being processed during a respective FFT frame, when a PN sequence is used in a respective guard interval.

The guard interval 44a, 44b, 44c is operable to provide a guard time in case of e.g. a propagation delay and to clearly separate the respective data frames 42a, 42b, 42c from each other, so that the data of one data frame does not overlap with data of an adjacent data frame in case of a multipath propagation during a transmission.

The data frame 42a, 42b, 42c is operable to provide data and/or information of any kind, which is based on or corresponds to the content of a conversation like e.g. a phone call or other data meant to be transmitted and received by another communication participant. These data might comprise for example video data, audio data, emails, pictures, control data and the like. The data frames 42a, 42b, 42c are favourably of the same size, whereby their data does not necessarily fill out said data frames completely. The data can also be stored in a scattered pattern in the data frame.

The sequence or alternatively said the time flow of the frame structure starts with the first PN sequence 40a, continues with adjacent first data frame 42a, then the second PN sequence 40b, the second data frame 42b, the third PN sequence 40c and ends with the third data frame 42c. Of course, the frame structure is not limited to these three data frames and three PN sequences, but can comprise a higher or lower number of data frames and PN sequences. Also, each guard interval may comprise more than one PN sequence, whereby it is advantageous if each guard interval has the same number of sequences.

A FFT frame, whose operability was already explained in Figure 1, might be as long as the combination of at least one data frame 42a, 42b, 42c and of at least one guard interval 44a, 44b, 44c. This is different to the example of Figure 1, wherein one FFT frame has the length of one data frame.

Regarding the PN sequence, the guard interval might comprise either a single PN sequence or a plurality of identical PN sequences, whereby said plurality of PN sequences is formed as a continuous string of sequences.

It is emphasized that all the characteristics and features of the PN sequence described and used in the guard interval may also apply for the PN sequence used in the frame structures of the other figures.

The correlation of the guard interval with a predetermined and/or controllable function comprising one or a plurality of identical PN sequences is performed in a correlator of the receiver 34 of Figure 2 or the receiver 32 of Figure 3, operable to receive the signal sent from the transmitter 33 or 31, respectively. The choice regarding the predetermined function and its amount of PN sequences is dependent on the characteristics of the correlation to be determined.

Figure 5 shows a burst frame 101 according to the present invention comprising a burst preamble 100 and a frame structure 43a. Said structure 43a is similar to the frame structure 43 shown in Figure 4 and shows five PN sequences 40a, 40b, 40c, 40y, 40z as cyclic prefix and three data frames 42a, 42b and 42y. The PN sequences 40a to 40c and 40y are part of the guard intervals 44a, 44b, 44c and 44y, respectively. The burst preamble 100 comprises at least one PN sequence, which is the same PN sequence as used in one or all guard intervals.

At least one further data frame may exist between the guard intervals 44c and 44y. But the frame structure 43a could also only comprise one data frame 42a and the adjacent PN sequences 40a and 40b, eventually meaning that the present invention is not restricted to a specific number of data frames and/or guard intervals.

Figure 6 shows a detailed view of a state of the art example of a burst preamble 100 comprising a first preamble section 103 and a second preamble section 104. This burst preamble 100 can e.g. be used as the burst preamble 100 of the frame structure 101 of Fig. 5 or as preamble of the frame structure 43 of Fig. 4.

The first preamble section 103 is used in the receiver for frame synchronisation, course timing synchronisation, course frequency offset estimation and/or automatic game control (AGC). The first preamble section 103 comprises ten training symbols which are arranged next to each other, without gaps.

In another example, gaps may be implemented between the training symbols. This can be done

- by keeping the duration of the training symbols constant and extending the duration of the preamble section or
- by keeping the duration of the preamble section constant and reducing the duration of the training symbols or
- by keeping the duration of the preamble section constant and reducing the number of training symbols.

The second preamble section 104 comprises a long guard interval 106, a first long symbol 107a and a second long symbol 107b. The two long symbols 107a and 107b are used in the receiver for fine frequency offset estimation and for channel estimation.

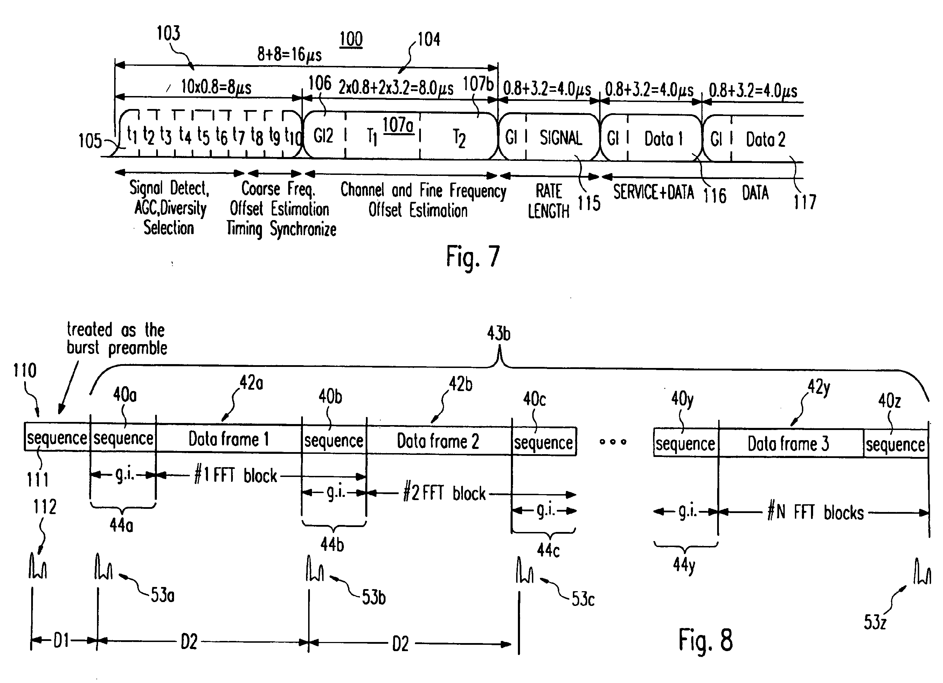

Figure 7 shows another detailed view of a state of the art example of a burst preamble 100 which comprises all the features shown in Figure 6, which are eventually the first preamble section 103, the second preamble section 104, the plurality of training symbols 105, the long guard interval 106, the first long symbol 107a and the second long symbol 107b.

In addition, it is shown, that the time duration of the burst preamble is sixteen microseconds long and both the first and the second preamble section take each eight microseconds; thus splitting said sixteen microseconds in two even portions. One training symbol 105 has a time duration of 0.8 microseconds, the long guard interval 106 has a duration of 1.6 microseconds and both the first and the second long symbol 107a and 107b have each a time duration of 3.2 microseconds, respectively.

Three data frames 115, 116, 117 are succeeding the burst preamble 100, whereby the first data frame 115 comprises a preceding guard interval of 0.8 microseconds and a signal of 3.2 microseconds afterwards, the second data frame 116 comprises a guard interval of 0.8 microseconds and a data block of 3.2 microseconds. The third data frame 117 corresponds to the second data frame 116, whereby the two data blocks can be different to each other.

In another example, the guard intervals of Fig. 7 preceding the data frames 115, 116, 117 may correspond to the guard intervals 14a-14c of Fig. 1, respectively.

Figure 8 shows another example of a burst frame comprising an embodiment of the present invention, said embodiment comprising a preamble 110 and in addition a succeeding frame structure 43b, said frame structure 43b being similar to or might even correspond to the frame structure 43a shown in Figure 5 or the frame structure 43 of Fig. 4.

The preamble 110 comprises a single PN sequence 111, which exhibits a correlation function 112 shown below which is the result after processing it in a correlator of the receiver 32. Also the PN sequences 40a, 40b, 40c, 40z show the same correlation functions 53a, 53b, 53c, 53z, respectively. The PN sequence 40y has, of course, also a correlation function, but said function is not shown in Figure 8.

Due to the different time spaces between the correlation functions from e.g. peak to peak or minimum to minimum, the time duration D1 between the correlation functions 112 of the preamble and the correlation function 53a of the PN sequence of the first guard interval 44a is shorter than the time duration D2 between the correlation functions 53a and 53b or 53b and 53c of the PN sequences of the guard intervals between the data frames. Thus, by detecting a time duration, such as D 1 or D2, and comparing said time duration with an already identified time duration or a predefined, stored and/or predetermined time duration, the receiver 34 or 32 can determine valuable information, e.g. at which position of the burst frame the receiver is reading the burst frame at the moment.

The detection method can be summarized as follows:

1. When the distance between two autocorrelation peaks is roughly equal or equal to D2, said part will be treated as the data part.
2. When the distance between two autocorrelation peaks is roughly equal or equal to D1, which is different to D2, the coarse frame timing is acquired, which indicates the beginning of the burst frame.

Advantageously, at least one PN sequence is proposed to be used as the part of the burst preamble 110, which is identical to the succeeding PN sequences of the guard intervals between the data frames.

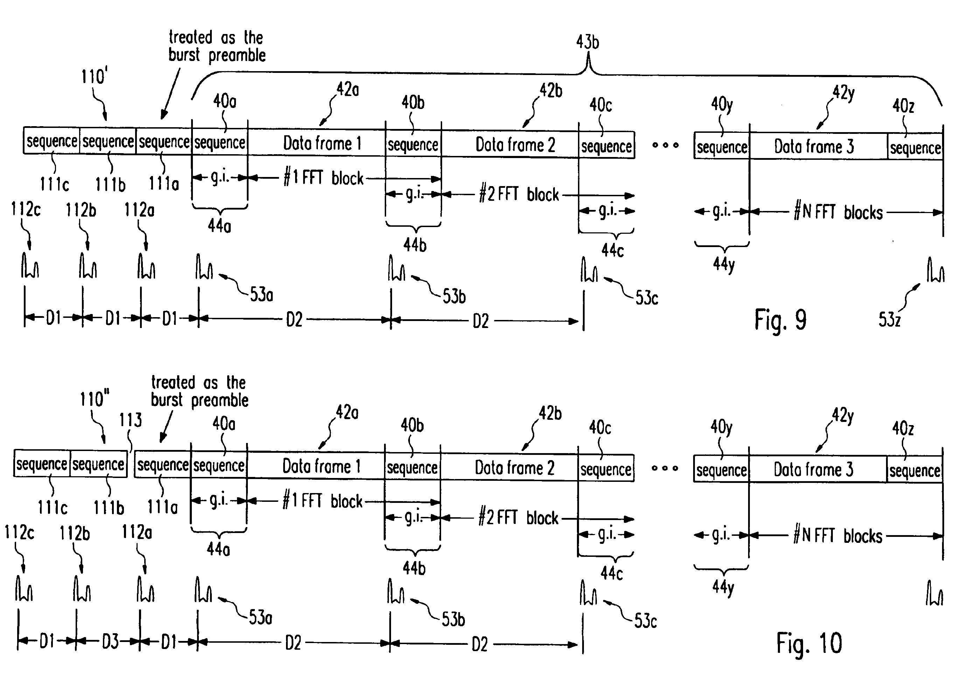

Figure 9 shows another detailed view of an example of a burst frame comprising a preamble 110' and a frame structure 43b, said frame structure 43b corresponding to the one shown in Figure 8.

The preamble 110' in this example comprises three PN sequences 111a, 111b and 111c, which exhibit the correlation functions 112a, 112b and 112c, respectively as shown below. The time duration D 1 between the correlation graphs 112c and 112b as well as between 112b and 112a and 112a and 53a are the same, respectively. The time duration D2 between the correlation graphs 53a and 53b is larger than the time duration D1.

The idea of detecting the current position within the burst frame and/or of detecting different synchroni-

17 **EP 2 099 187 B1** 18

zations can be extended to more than one PN sequence in the burst preamble to improve the detection reliability and reduce the false alarm probability. When more than one PN sequence is used as a part of a burst preamble, a -PN sequence can be used instead of a PN sequence. -PN stands for an inverse sequence of PN, respectively, whereby e.g. +1 is set to -1 and -1 is set to +1. The same applies to M sequences.

In another example, at least one PN sequence which is used as cyclic prefix is exactly the same one used to construct the preambles. Favourably, the preamble comprises only one or up to three of said PN sequences, whereby in case of three PN sequences, the one in the middle has to be inverted.

Figure 10 shows another detailed view of an example of a burst frame which comprises a preamble 110" as well as a frame structure similar or equal to the one 43b shown in Figure 9 or 8. The preamble 110" comprises three PN sequences 111a, 111b, 111 c and a free space 113 between the first PN sequence 111a and the second PN sequence 111b of the preamble burst 110". Due to this free space 113, the time duration D3 between the correlation graphs 112b and 112a is larger than the time duration D1 between the correlation graphs 112c and 112b or between 112a and 53a. Except for the preamble 110", the burst frame corresponds to the one shown in Figure 9.

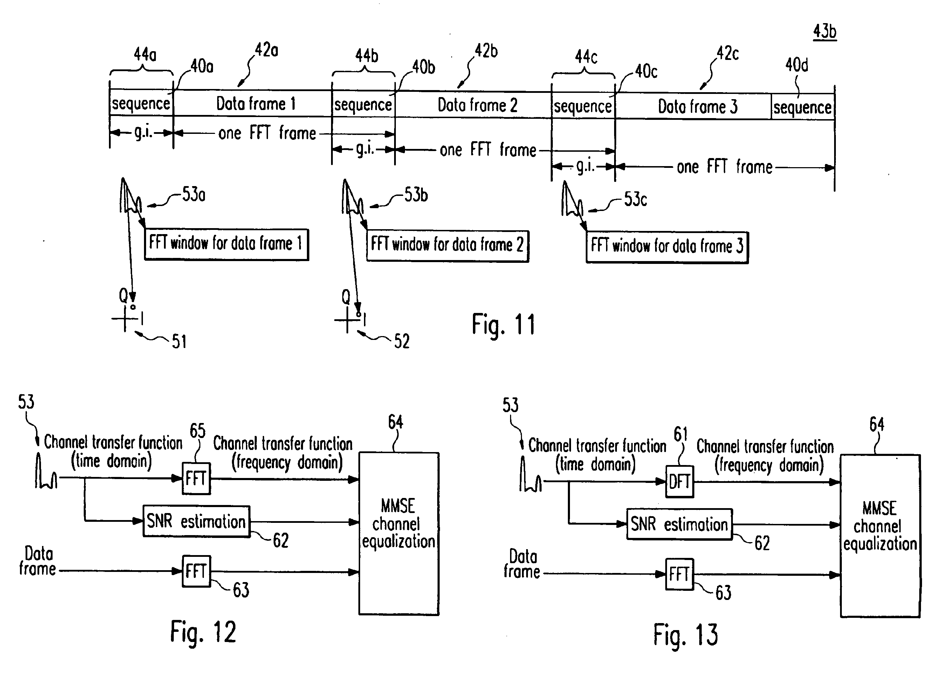

Figure 11 shows another example of a part of a frame structure 43b of a burst frame of the present invention and the coarse frame timing and the carrier synchronization based on the correlation peak of a PN sequence in the receiver 32.

This frame structure 43b corresponds to the frame structure 43 shown in Fig. 4 and comprises four PN sequences 40a, 40b, 40c, 40d and three data frames 42a, 42b, 42c, whereby the first three PN sequences are used in guard intervals. Below each of these PN sequences 40a, 40b, 40c the correlation function of said PN sequences is shown as a graph 53a, 53b, 53c, respectively.

The correlation graphs 53a, 53b, 53c of the PN sequences comprises a high correlation peak and a low correlation side-lobe, respectively. This correlation function is created in a correlator of the receiver 32, when the signal with the frame structure comprising the PN sequence is received and correlated with an identical PN sequence (cross-correlation) or with itself (auto-correlation).

In case the guard interval 44a comprises a plurality of identical PN sequences formed as a continuous string and is correlated with one identical PN sequence at a receiver, the correlation graph of the PN sequence will comprise a plurality of high correlation peaks and low correlation side-lobes.

In another example, the guard interval 44a comprises a plurality of e.g. different PN sequences formed as a continuous string and is correlated with one PN sequence being part of said string, it is possible to locate the exact position within the guard interval, when the high correlation peak appears in the graph.

Instead of one single PN sequence, a correlation sequence of identical or different PN sequences can be used for correlating with said received correlation sequence.

Due to the characteristics of the correlation graphs 53a, 53b, 53c of the PN sequences 40a, 40b, 40c, the receiver 32 can achieve coarse timing, channel estimation carrier synchronization, obtain signal-noise-ratio (SNR) estimation and/or implement minimum mean-square error (MMSE) channel equalization on the basis of the PN sequences. The MMSE channel equalization is described more in detail in relation to Figure 12 and 13.

Based on the characteristics of the graphs 53a, 53b, 53c, it is possible to determine the beginning of the FFT frame. The FFT frame might start from the beginning or at the end of the graphs 53a, 53b, 53c. Also the high correlation peak or the low correlation side-lobe might be the starting point of the FFT frame. The FFT frame, which is already explained in Figure 4, comprises at least the data frame succeeding the respective PN sequence. Alternatively the beginning of the FFT frame is independent from the guard interval, but at least comprises the complete succeeding data frame.

In particular the coarse frame timing can be determined by the correlation peak of the graph 53a, 53b, 53c of the PN sequence as shown in Figure 11.

The carrier synchronization can be implemented based on the I/Q constellation rotation of the strongest correlation peak of two nearby PN sequences. Below the correlation graphs 53a and 53b the respective constellation points 51 and 52 are shown in Cartesian coordinates. The phase difference between these two constellation points and the time period between the two PN sequences 40a and 40b can be used for carrier synchronization.

The guard interval might comprise at least one PN sequence, whereby said one PN sequence has a complex value and comprises one I-channel PN sequence and one Q-channel PN sequence. In alternative embodiments the I-channel sequence and the Q-channel sequence could either be identical or different from each other. Alternatively, the correlation value has a complex value comprising a real and an imaginary part like I and Q.

The channel transfer function can be estimated based on several correlation peaks of the graphs 53a, 53b, 53c of the respective PN sequences, whereby the correlation side-lobe from the PN sequence can be used for signal to noise ratio (SNR) calculation. The acquired information can be used for MMSE channel equalization, as shown in Figures 12 and 13.

Figure 12 shows an device for channel equalization based on FFT, which can be an additional part of the receiver 32 or the receiver 34 of the present invention.

This device comprises a FFT module 65, a SNR estimation module 62, a FFT module 63 and a MMSE channel equalization module 64, whereby said device is adapted to perform for channel equalization. At least a

10

part of said device can be implemented into the receiver 34 of Figure 2 or the receiver 32 of Fig. 3 e.g. as a channel equalizer 27 or 127; in particular the MMSE channel equalizer 64 can be implemented as said equalizer 27 or 127.

The FFT module 65 is operable to receive a signal which represents a channel transfer function in the time domain, convert said signal into a signal representing a channel transfer function in the frequency domain and output said signal. The SNR estimation module 62 is operable to receive the same channel transfer function in the time domain, which was received by the FFT module 65 and calculate and/or estimate the signal-noise-ratio of said function on the basis of the correlation side-lobe. The FFT module 63 is operable to receive a signal comprising the data frame and apply the FFT to said signal. The MMSE channel equalization module 64 is operable to receive the channel transfer function in the frequency domain provided by the FFT module 65, the SNR estimation signal provided by the SNR estimation module 62 and the signal provided by the FFT module 63 and eventually calculate and demodulate the output signal.

It has to be ensured that the channel transfer function 53 comprises the PN sequence with a main high (auto-)correlation lobe and a smaller (auto-)correlation side-lobe. Other correlation characteristics are, of course, possible.

Figure 13 shows an example of an apparatus for a channel equalization based on a Discrete Fourier Transformation (DFT).
This device comprises a Discrete Fourier Transformation (DFT) module 61, a SNR estimation module 62, a FFT module 63 and a MMSE channel equalization module 64, whereby said apparatus is operable for channel equalization.

Except for the FFT module 65, the device of Fig. 13 corresponds to the apparatus of Fig. 12. The device of Fig. 13 can be implemented into said receiver 34 or said receiver 32.

Like in Fig. 12, it has to be ensured in Fig. 13 that the channel transfer function 53 comprises the PN sequence with a main high (auto-)correlation lobe and a smaller (auto-)correlation side-lobe.

As shown in Fig. 13, FFT can be used instead of DFT to reduce the calculation complexity for obtaining the channel transfer function from frequency domain, which will be adopted for channel equalization.

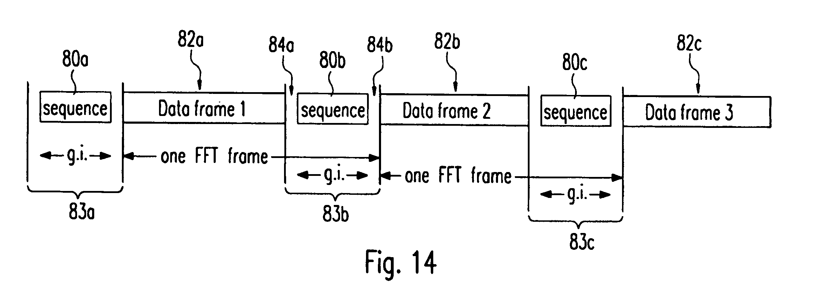

Figure 14 shows another example of a frame structure with an additional guard interval.

This frame structure is based on the frame structure 43 shown in Fig. 4 and comprises three guard intervals 83a, 83b, 83c and three data frames 82a, 82b, 82c, whereby said guard intervals are or comprise at least one PN sequence, respectively. In each of said guard intervals 83a, 83b, 83c a respective PN sequence is embedded. Since the guard intervals 83a, 83b, 83c are in this example larger than the PN sequences 80a, 80b, 80c, some free space is left on the right and left side of the PN sequences. For example and in detail an additional guard interval or free space 84a is located between the data frame 82a and the PN sequence 80b and an additional guard interval or second free space 84b is located between the PN sequence 80b and the data frame 82b.

Thus, the guard interval 83a, 83b, 83c between the data frames is extended in this example. If the length of guard interval 83a, 83b, 83c is longer than the wireless channel delay spread, there is no effect on the correlation peak from the data frame part and more accurate channel estimation can be obtained.

The additional guard intervals between the PN sequences and the data frames, meaning the free spaces 84a and 84b can comprise a sequence of zeros. The two free spaces 84a and 84b might be of different or equal size, respectively.

The invention is not limited to the features shown and described above by way of example, but can instead undergo modifications within the scope of the patent claims attached.
Further embodiments of the invention are possible, but not shown in the drawings for the sake of clarity.

## Reference numbers

**[0107]**

| | |
|---|---|
| 1 | First position in cyclic prefix |
| 2 | Second position in cyclic prefix |
| 3 | Third position in cyclic prefix |
| 4 | Fourth position in cyclic prefix |
| 5 | Fifth position in cyclic prefix |
| 6 | Sixth position in cyclic prefix |
| 7 | Seventh position in cyclic prefix |
| 8 | Eighth position in cyclic prefix |
| 10a-c | Cyclic prefix |
| 11 a-c | End of data frame 1-3 |
| 12a-c | Data frame 1-3 |
| 13 | Frame structure of state of the art |
| 14a-c | Guard intervals |
| 20 | Quadrature amplitude modulation (QAM) modulator |
| 21 | Inverse Fast Fourier Transformation (Inverse FFT) module |
| 22 | Cyclic prefix insertion module |
| 23 | Radio frequency transmitter (Tx RF) |
| 24 | Radio frequency receiver (Rx RF) |
| 25 | Remove cyclic prefix module |
| 26 | Fast Fourier Transformation (FFT) module |
| 27 | Channel equalizer |
| 28 | Channel estimation module |
| 29 | QAM demodulator |
| 31 | Transmitter of single carrier system |
| 32 | Receiver of single carrier system |
| 33 | Transmitter of OFDM system (orthogonal frequency division multiplex) |

| 34 | Receiver of OFDM system (orthogonal frequency division multiplex) |
| 35 | Antenna of transmitter |
| 36 | Antenna of receiver |
| 40a-d, y, z | PN sequence as cyclic prefix |
| 42a-c, y | Data frame 1-3 |
| 43, 43a, 43b | Frame structure |
| 44a-d, y | Guard intervals |
| 51 | Constellation point of PN sequence of data frame 1 |
| 52 | Constellation point of PN sequence of data frame 2 |
| 53 | Channel transfer function (time domain) |
| 53a-c, z | Correlation function of PN sequence as graph |
| 61 | Discrete Fourier Transformation module |
| 62 | Signal-Noise-Ratio estimation module |
| 63 | Fast Fourier Transformation module |
| 64 | Minimum mean-square error estimation module |
| 65 | Fast Fourier Transformation module |
| 80a-c | PN sequence as cyclic prefix |
| 82a-c | Data frame 1-3 |
| 83a-c | Guard interval |
| 84a | First free space |
| 84b | Second free space |
| 90 | Cyclic prefix |
| 91a | First free space |
| 91b | Second free space |
| 93 | Symmetric axis of cyclic prefix |
| 94 | Guard interval |
| 95a | Boarder between preceding data frame and guard interval |
| 95b | Boarder between succeeding data frame and guard interval |
| 100 | Burst preamble |
| 101 | Burst frame |
| 103 | Preamble section 1 |
| 104 | Preamble section 2 |
| 105 | Training symbol |
| 106 | Long guard interval |
| 107a | Long symbol |
| 107b | Long symbol 2 |
| 110 | Preamble |
| 111 | PN sequence of preamble |
| 111a-c | PN sequence 1-3 of preamble |
| 112 | Correlation function of PN sequence of preamble as graph |
| 112a-c | Correlation function of PN sequence 1-3 of preamble as graph |
| 113 | Free space in preamble |
| 115 | Data frame with guard interval |
| 116 | Data frame with guard interval |
| 117 | Data frame with guard interval |

## Claims

1. A method for generating a wireless communication signal,
   whereby said communication signal is based on a temporal frame structure with burst frames (101), each burst frame comprising at least one combination of a guard interval (44a, 44b, 44c) and a data frame (42a, 42b, 42c), said method comprising the step of inserting a preamble (100) before a first of said at least one combination, said preamble (100) and said guard interval (44a, 44b, 44c) comprising at least one pseudorandom-noise, PN, sequence (111, 40a), whereby said at least one PN sequence (40a) of the guard interval (44a) is identical to said at least one PN sequence (111) of the preamble (100).

2. A method according to claim 1,
   whereby said preamble (100) comprises a plurality of PN sequences (111a, 111b, 111c).

3. A method according to claim 2,
   whereby at least two adjacent PN sequences of said plurality of PN sequences of said preamble are arranged with a distance to each other, wherein control information is encoded in said distance.

4. A method according to claim 2 or 3,
   whereby at least one PN sequence of said plurality of PN sequences of said preamble is inverted in relation to the other PN sequences of said preamble.

5. A method according to one of the claims 1 to 4,
   in case the preamble comprises three PN sequences, the one in the middle is inverted in relation to the other two PN sequences.

6. A method according to one of the claims 1 to 5,
   whereby said at least one PN sequence is a maximum length sequence.

7. A method according to one of the claims 1 to 6,
   whereby said wireless communication signal is a single carrier or a multi carrier communication signal.

8. A signal generator operable to generate a wireless communication signal, whereby said communication signal is based on a temporal frame structure with burst frames (101), each burst frame comprising at least one combination of a guard interval and (44a, 44b, 44c) a data frame (42a, 42b, 42c),
   said generator comprising
   a preamble insertion module (22) operable to insert a preamble (100) before the first of said at least one combination, said preamble (100) and said guard interval (44a, 44b, 44c) comprising at least one pseudorandom-noise, PN, sequence (111, 40a), respectively, whereby said at least one PN sequence (40a) of the guard interval (44a) is identical to said at least one PN sequence (111) of the preamble (100).

9. A signal generator according to claim 8, whereby said preamble comprises a plurality of PN sequences (111a, 111b, 111c).

10. A signal generator according to claim 9, whereby at least two adjacent PN sequences of said plurality of PN sequences of said preamble are arranged with a distance to each other, wherein control information is encoded in said distance.

11. A signal generator according to claim 10 or 11, whereby at least one PN sequence of said plurality of PN sequences of said preamble is inverted in relation to the other PN sequences of said preamble

12. A signal generator according to one of the claims 8 to 11, in case the preamble insertion module inserted three PN sequences, the one in the middle is inverted in relation to the other two PN sequences.

13. A signal generator according to one of the claims 8 to 12, whereby said at least one PN sequence is a maximum length sequence.

14. A signal generator according to one of the claims 8 to 13, whereby said wireless communication signal is a single carrier or a multi carrier communication signal.

15. A method for processing a received wireless communication signal, whereby said communication signal is based on a temporal frame structure with burst frames (101), each burst frame (101) comprising at least one combination of a guard interval (44a, 44b, 44c) and a data frame (42a, 42b, 42c) and a preamble (100) preceding said combination, said preamble (100) and said guard interval (44a, 44b, 44c) comprising at least one pseudorandom-noise, PN, sequence (111, 40a), said method comprising the steps of correlating said at least one PN sequence (111) of the preamble, and outputting a correlation function, whereby said at least one PN sequence (40a) of the guard interval (44a) is identical to said at least one PN sequence (111) of the preamble (100).

16. A method according to claim 15, wherein said correlation function from said at least one PN sequence of said preamble is used to perform burst frame detection, automatic gain control, coarse timing synchronization and/or coarse frequency synchronisation of said wireless communication signal.

17. A method according to claim 15 or 16, wherein said guard interval (44a, 44b, 44c) comprises at least one PN sequence (40a), said at least one PN sequence (40a) being identical to said at least one PN sequence (111) of said preamble (110), whereby said at least one PN sequence of the guard interval is correlated in order to obtain a correlation function, whereby said correlation function is used to perform channel estimation and/or equalization of said wireless communication signal.

18. A method according to one of the claims 15 to 17, further comprising the detection of a correlation peak (53a, 53b, 53c) in said correlation function(s).

19. A method according to one of the claims 15 to 19, wherein said burst frame (101) comprises at least two guard intervals (44a, 44b, 44c) with respective PN sequences and at least two PN sequences in said preamble (100), whereby timing information is detected from the correlation functions of said at least two PN sequences of the preamble (100) and correlation functions of the PN sequences of the guard intervals.

20. A method according to claim 19, wherein a predetermined time duration between the correlation functions of said at least two PN sequences of the preamble identifies the presence of a preamble.

21. A method according to claim 19 or 20, wherein a predetermined time duration between the correlation functions of said PN sequences of the guard intervals identifies the presence of a data frame (42a, 42b, 42c).

22. A method according to one of the claims 15 to 21, wherein said preamble (100) comprises a plurality of PN sequences (111a, 111b, 111c), wherein a detection of a variation in time durations between the correlation functions of said PN sequences of the preamble (100) is performed in order to obtain control information.

23. A signal processor operable to process a received single carrier wireless communication signal, whereby said communication signal is based on a temporal frame structure with burst frames (101), each burst frame comprising at least one combination of a guard interval (44a, 44b, 44c) and a data frame (42a, 42b, 42c) and a preamble (100) preceding said combination, said preamble (100) and said guard interval (44a, 44b, 44c) comprising at least one pseudorandom-noise, PN, sequence (111, 40a)

said processor comprising

a correlation module operable to correlate at least a part of said at least one PN sequence (111) of the preamble (100) and to output a correlation function, whereby said at least one PN sequence (40a) of the guard interval (44a) is identical to said at least one PN sequence (111) of the preamble (100).

**24.** A signal processor according to claim 23, wherein said signal processor is operable to use said correlation function from said at least one PN sequence (111) of said preamble (100) to perform burst frame detection, automatic gain control, coarse timing synchronization and/or coarse frequency synchronisation of said wireless communication signal.

**25.** A signal processor according to claim 23 or 24, wherein said guard interval comprises at least one PN sequence, said at least one PN sequence being identical to said at least one PN sequence of said preamble, whereby said correlation module is operable to correlate said at least one PN sequence (40a) of the guard interval (44a) in order to obtain a correlation function, whereby said signal processor is operable to use said correlation function to perform channel estimation and/or equalization of said wireless communication signal.

**26.** A signal processor according to one of the claims 23 to 25, further comprising a detection module operable to detect a correlation peak in said correlation function(s).

**27.** A signal processor according to one of the claims 23 to 26, wherein said burst frame (101) comprises at least two guard intervals (44a, 44b) with respective PN sequences (40a, 40b) and at least two PN sequences in said preamble (100), whereby said signal processor is operable to detect timing information from the correlation functions of said at least two PN sequences of the preamble and correlation functions of the PN sequences of the guard intervals.

**28.** A signal processor according to claim 27, wherein a predetermined time duration between the correlation functions of said at least two PN sequences (111 a, 111b) of the preamble (110) identifies the presence of a preamble.

**29.** A signal processor according to claim 27 or 28, wherein a predetermined time duration between the correlation functions of said PN sequences (40a) of the guard intervals (44a) identifies the presence of a data frame (42a).

**30.** A signal processor according to one of the claims 23 to 29, wherein said preamble (100) comprises a plurality of PN sequences (111a, 111b), wherein said signal processor is operable to perform a detection of a variation in time durations between the correlation functions of said PN sequences of the preamble in order to obtain control information.

**Patentansprüche**

**1.** Verfahren zur Erzeugung eines drahtlosen Kommunikationssignals, wobei das Kommunikationssignal auf einer zeitlichen Rahmenstruktur mit Burst-Rahmen (101) basiert, wobei jeder Burst-Rahmen wenigstens eine Kombination eines Guard-Intervals (44a, 44b, 44c) und eines Daten-Rahmens (42a, 42b, 42c) aufweist, wobei das Verfahren den Schritt aufweist:

Einfügen einer Präambel (100) vor einer ersten der wenigstens einen Kombination, wobei die Präambel (100) und das Guard-Interval (44a, 44b, 44c) wenigstens eine Pseudozufallsrausch-Sequenz (111, 40a), PN-Sequenz, aufweist, wobei die wenigstens eine PN-Sequenz (40a) des Guard-Intervals (44a) mit wenigstens einer PN-Sequenz (111) der Präambel (100) identisch ist.

**2.** Verfahren gemäß Anspruch 1, wobei die Präambel (100) eine Vielzahl von PN-Sequenzen (111a, 111b, 111c) aufweist.

**3.** Verfahren gemäß Anspruch 2, wobei wenigstens zwei benachbarte PN-Sequenzen der Vielzahl von PN-Sequenzen der Präambel mit einem Abstand zueinander angeordnet sind, wobei Steuerinformation in den Abstand kodiert ist.

**4.** Verfahren gemäß Anspruch 2 oder 3, wobei wenigstens eine PN-Sequenz der Vielzahl von PN-Sequenzen der Präambel in Bezug auf die anderen PN-Sequenzen der Präambel invertiert ist.

**5.** Verfahren gemäß einem der Ansprüche 1 bis 4, wobei für den Fall, dass die Präambel drei PN-Sequenzen aufweist, die mittlere PN-Sequenz in Bezug auf die anderen beiden PN-Sequenzen invertiert ist.

**6.** Verfahren gemäß einem der Ansprüche 1 bis 5, wobei die wenigstens eine PN-Sequenz eine Maximallängen-Sequenz ist.

**7.** Verfahren gemäß einem der Ansprüche 1 bis 6, wobei das drahtlose Kommunikationssignal ein Einzelträger- oder ein Mehrträger-Kommunikationssignal ist.

8. Signalgenerator zur Erzeugung eines drahtlosen Kommunikationssignals,
   wobei das Kommunikationssignal auf einer zeitlichen Rahmenstruktur mit Burst-Rahmen (101) basiert, wobei jeder Burst-Rahmen wenigstens eine Kombination eines Guard-Intervals (44a, 44b, 44c) und eines Daten-Rahmens (42a, 42b, 42c) aufweist, wobei der Generator aufweist:

   ein Präambeleinfügungsmodul (22) zum Einfügen einer Präambel (100) vor der ersten der wenigstens einen Kombination, wobei die Präambel (100) und das Guard-Interval (44a, 44b, 44c) wenigstens eine Pseudozufallsrausch-Sequenz (111, 40a), PN-Sequenz, aufweist, wobei die wenigstens eine PN-Sequenz (40a) des Guard-Intervals (44a) mit wenigstens einer PN-Sequenz (111) der Präambel (100) identisch ist.

9. Signalgenerator gemäß Anspruch 8,
   wobei die Präambel (100) eine Vielzahl von PN-Sequenzen (111a, 111b, 111c) aufweist.

10. Signalgenerator gemäß Anspruch 9,
    wobei wenigstens zwei benachbarte PN-Sequenzen der Vielzahl von PN-Sequenzen der Präambel mit einem Abstand zueinander angeordnet sind, wobei Steuerinformation in den Abstand kodiert ist.

11. Signalgenerator gemäß Anspruch 10 oder 11,
    wobei wenigstens eine PN-Sequenz der Vielzahl von PN-Sequenzen der Präambel in Bezug auf die anderen PN-Sequenzen der Präambel invertiert ist.

12. Signalgenerator gemäß einem der Ansprüche 8 bis 11,
    wobei für den Fall, dass die Präambel drei PN-Sequenzen aufweist, die mittlere PN-Sequenz in Bezug auf die anderen beiden PN-Sequenzen invertiert ist.

13. Signalgenerator gemäß einem der Ansprüche 8 bis 12,
    wobei die wenigstens eine PN-Sequenz eine Maximallängen-Sequenz ist.

14. Signalgenerator gemäß einem der Ansprüche 8 bis 13,
    wobei das drahtlose Kommunikationssignal ein Einzelträger- oder ein Mehrträger-Kommunikationssignal ist.

15. Verfahren zur Verarbeitung eines empfangenen drahtlosen Kommunikationssignals,
    wobei das Kommunikationssignal auf einer zeitlichen Rahmenstruktur mit Burst-Rahmen (101) basiert, wobei jeder Burst-Rahmen (101) wenigstens eine Kombination eines Guard-Intervals (44a, 44b, 44c) und eines Daten-Rahmens (42a, 42b, 42c) sowie eine der Kombination vorausgehende Präambel (100) aufweist, wobei die Präambel (100) und das Guard-Interval (44a, 44b, 44c) wenigstens eine Pseudozufallsrausch-Sequenz (111, 40a), PN-Sequenz, aufweist,
wobei das Verfahren die Schritte aufweist:

   Korrelieren der wenigstens einen PN-Sequenz (111) der Präambel und
   Ausgeben einer Korrelationsfunktion, wobei die wenigstens eine PN-Sequenz (40a) des Guard-Intervals (44a) identisch ist mit wenigstens einer PN-Sequenz (111) der Präambel (100).

16. Verfahren gemäß Anspruch 15,
    wobei die Korrelationsfunktion von der wenigstens einen PN-Sequenz der Präambel benutzt wird, um Burst-Rahmen-Detektion, automatische Verstärkungsregelung, grobe Zeitsynchronisation und/oder grobe Frequenzsynchronisation des drahtlosen Kommunikationssignals durchzuführen.

17. Verfahren gemäß Anspruch 15 oder 16,
    wobei das Guard-Interval (44a, 44b, 44c) wenigstens eine PN-Sequenz (40a) aufweist, wobei die wenigstens eine PN-Sequenz (40) identisch ist mit wenigstens einer PN-Sequenz (111) der Präambel (110), wobei die wenigstens eine PN-Sequenz des Guard-Intervals korreliert wird, um eine Korrelationsfunktion zu erhalten, wobei die Korrelationsfunktion dazu benutzt wird, Kanalschätzung und/oder Entzerrung des drahtlosen Kommunikationssignals durchzuführen.

18. Verfahren gemäß einem der Ansprüche 15 bis 17,
    ferner umfassend die Detektion eines Korrelationspeaks (53a, 53b, 53c) in der (den) Korrelationsfunktion(en).

19. Verfahren gemäß einem der Ansprüche 15 bis 19,
    wobei der Burst-Rahmen (101) wenigstens zwei Guard-Intervalle (44a, 44b, 44c) mit entsprechenden PN-Sequenzen und wenigstens zwei PN-Sequenzen in der Präambel (100) aufweist, wobei Zeitinformation aus den Korrelationsfunktionen der wenigstens zwei PN-Sequenzen der Präambel und aus den Korrelationsfunktionen der PN-Sequenzen der Guard-Intervalle detektiert wird.

20. Verfahren gemäß Anspruch 19,
    wobei eine vorbestimmte Zeitdauer zwischen den Korrelationsfunktionen der wenigstens zwei PN-Sequenzen der Präambel das Vorhandensein einer Präambel anzeigt.

21. Verfahren gemäß Anspruch 19 oder 20,
    wobei eine vorbestimmte Zeitdauer zwischen den Korrelationsfunktionen der PN-Sequenzen der Guard-Intervalle das Vorhandensein eines Daten-Rahmens (42a, 42b, 42c) anzeigt.

**22.** Verfahren gemäß einem der Ansprüche 15 bis 21, wobei die Präambel (100) eine Vielzahl von PN-Sequenzen (111a, 111b, 111c) aufweist, wobei eine Detektion einer Änderung der Zeitdauern zwischen den Korrelationsfunktionen der PN-Sequenzen der Präambel (100) durchgeführt wird, um Steuerinformation zu erhalten.

**23.** Signalprozessor zur Verarbeitung eines empfangenen drahtlosen Einzelträger-Kommunikationssignals, wobei das Kommunikationssignal auf einer zeitlichen Rahmenstruktur mit Burst-Rahmen (101) basiert, wobei jeder Burst-Rahmen wenigstens eine Kombination eines Guard-Intervals (44a, 44b, 44c) und eines Daten-Rahmens (42a, 42b, 42c) sowie eine der Kombination vorausgehende Präambel (100) aufweist, wobei die Präambel (100) und das Guard-Interval (44a, 44b, 44c) wenigstens eine Pseudozufallsrausch-Sequenz (111, 40a), PN-Sequenz, aufweist, wobei der Prozessor aufweist:

ein Korrelationsmodul zum Korrelieren wenigstens eines Teils der wenigstens einen PN-Sequenz (111) der Präambel (100) und zum Ausgeben einer Korrelationsfunktion, wobei die wenigstens eine PN-Sequenz (40a) des Guard-Intervals (44a) identisch ist mit wenigstens einer PN-Sequenz (111) der Präambel (100).

**24.** Signalprozessor gemäß Anspruch 23, wobei der Signalprozessor ausgestaltet ist, die Korrelationsfunktion von der wenigstens einen PN-Sequenz (111) der Präambel (100) zu benutzen, um Burst-Rahmen-Detektion, automatische Verstärkungsregelung, grobe Zeitsynchronisation und/oder grobe Frequenzsynchronisation des drahtlosen Kommunikationssignals durchzuführen.

**25.** Signalprozessor gemäß Anspruch 23 oder 24, wobei das Guard-Interval wenigstens eine PN-Sequenz aufweist, wobei die wenigstens eine PN-Sequenz identisch ist mit wenigstens einer PN-Sequenz der Präambel, wobei das Korrelationsmodul ausgestaltet ist, die wenigstens eine PN-Sequenz (40a) des Guard-Intervals (44a) zu korrelieren, um eine Korrelationsfunktion zu erhalten, wobei der Signalprozessor ausgestaltet ist, die Korrelationsfunktion dazu zu benutzen, Kanalschätzung und/oder Entzerrung des drahtlosen Kommunikationssignals durchzuführen.

**26.** Signalprozessor gemäß einem der Ansprüche 23 bis 25,

ferner umfassend ein Detektionsmodul zur Detektion eines Korrelationspeaks in der (den) Korrelationsfunktion(en).

**27.** Signalprozessor gemäß einem der Ansprüche 23 bis 26, wobei der Burst-Rahmen (101) wenigstens zwei Guard-Intervalle (44a, 44b) mit entsprechenden PN-Sequenzen (40a, 40b) und wenigstens zwei PN-Sequenzen in der Präambel (100) aufweist, wobei der Signalprozessor ausgestaltet ist, die Zeitinformation aus den Korrelationsfunktionen der wenigstens zwei PN-Sequenzen der Präambel und Korrelationsfunktionen der PN-Sequenzen der Guard-Intervalle zu detektieren.

**28.** Signalprozessor gemäß Anspruch 27, wobei eine vorbestimmte Zeitdauer zwischen den Korrelationsfunktionen der wenigstens zwei PN-Sequenzen (111a, 111b) der Präambel (110) das Vorhandensein einer Präambel anzeigt.

**29.** Signalprozessor gemäß Anspruch 27 oder 28, wobei eine vorbestimmte Zeitdauer zwischen den Korrelationsfunktionen der PN-Sequenzen (40a) der Guard-Intervalle (44a) das Vorhandensein eines Daten-Rahmens (42a) anzeigt.

**30.** Signalprozessor gemäß einem der Ansprüche 23 bis 29, wobei die Präambel (100) eine Vielzahl von PN-Sequenzen (111a, 111b) aufweist, wobei der Signalprozessor ausgestaltet ist, eine Detektion einer Änderung der Zeitdauern zwischen den Korrelationsfunktionen der PN-Sequenzen der Präambel durchzuführen, um Steuerinformation zu erhalten.

**Revendications**

**1.** Procédé de génération d'un signal de communication sans fil, dans lequel ledit signal de communication est basé sur une structure de cadre temporel avec des trames de rafale (101), chaque trame de rafale comprenant au moins une combinaison d'un intervalle de garde (44a, 44b, 44c) et un cadre de données (42a, 42b, 42c), ledit procédé comprenant l'étape d'insertion d'un préambule (100) avant une première de ladite au moins une combinaison, ledit préambule (100) et ledit intervalle de garde (44a, 44b, 44c) comprenant au moins une séquence de bruit pseudo-aléatoire, PN (111, 40a), où ladite au moins une séquence PN (40a) de l'intervalle de garde (44a) est identique à ladite au moins une séquence PN (111) du préambule (100).

**2.** Procédé selon la revendication 1,

dans lequel ledit préambule (100) comprend une pluralité de séquences PN (111a, 111 b, 111c).

3. Procédé selon la revendication 2,
dans lequel au moins deux séquences PN adjacentes de ladite pluralité de séquences PN dudit préambule sont agencées avec une distance l'une par rapport à l'autre, où des informations de commande sont encodées dans ladite distance.

4. Procédé selon la revendication 2 ou 3,
dans lequel au moins une séquence PN de ladite pluralité de séquences PN dudit préambule est inversée par rapport à d'autres séquences PN dudit préambule.

5. Procédé selon l'une des revendications 1 à 4,
dans lequel si le préambule comprend trois séquences PN, celle au milieu est inversée par rapport aux deux autres séquences PN.

6. Procédé selon l'une des revendications 1 à 5,
dans lequel ladite au moins une séquence PN est une séquence de longueur maximale.

7. Procédé selon l'une des revendications 1 à 6,
dans lequel ledit signal de communication sans fil est un signal de communication monoporteuse ou multiporteuse.

8. Générateur de signal opérationnel pour générer un signal de communication sans fil,
dans lequel ledit signal de communication est basé sur une structure de cadre temporel avec des trames de rafale (101), chaque trame de rafale comprenant au moins une combinaison d'un intervalle de garde (44a, 44b, 44c) et un cadre de données (42a, 42b, 42c),
ledit générateur comprenant
un module d'insertion de préambule (22) opérationnel pour insérer un préambule (100) avant une première de ladite au moins une combinaison, ledit préambule (100) et ledit intervalle de garde (44a, 44b, 44c) comprenant au moins une séquence de bruit pseudo-aléatoire, PN (111, 40a), respectivement, où ladite au moins une séquence PN (40a) de l'intervalle de garde (44a) est identique à ladite au moins une séquence PN (111) du préambule (100).

9. Générateur de signal selon la revendication 8,
dans lequel ledit préambule comprend une pluralité de séquences PN (111 a, 111b. 111c).

10. Générateur de signal selon la revendication 9,
dans lequel au moins deux séquences PN adjacentes de ladite pluralité de séquences PN dudit préambule sont agencées avec une distance l'une par rapport à l'autre, où des informations de commande sont encodées dans ladite distance.

11. Générateur de signal selon la revendication 10 ou 11,
dans lequel au moins une séquence PN de ladite pluralité de séquences PN dudit préambule est inversée par rapport aux autres séquences PN dudit préambule.

12. Générateur de signal selon l'une des revendications 8 à 11,
dans lequel si le préambule comprend trois séquences PN, celle au milieu est inversée par rapport aux deux autres séquences PN.

13. Générateur de signal selon l'une des revendications 8 à 12,
dans lequel ladite au moins une séquence PN est une séquence de longueur maximale.

14. Générateur de signal selon l'une des revendications 8 à 13,
dans lequel ledit signal de communication sans fil est un signal de communication monoporteuse ou multiporteuse.

15. Procédé de traitement d'un signal de communication sans fil reçu,
dans lequel ledit signal de communication est basé sur une structure de cadre temporel avec des trames de rafale (101), chaque trame de rafale (101) comprenant au moins une combinaison d'un intervalle de garde (44a, 44b, 44c) et un cadre de données (42a, 42b, 42c), et un préambule (100) précédant ladite combinaison, ledit préambule (100) et ledit intervalle de garde (44a, 44b, 44c) comprenant au moins une séquence de bruit pseudo-aléatoire, PN (111, 40a), ledit procédé comprenant les étapes consistant à
corréler ladite au moins une séquence PN (111) du préambule, et
fournir en sortie une fonction de corrélation, où ladite au moins une séquence PN (40a) de l'intervalle de garde (44a) est identique à ladite au moins une séquence PN (111) du préambule (100).

16. Procédé selon la revendication 15,
dans lequel ladite fonction de corrélation provenant de ladite au moins une séquence PN dudit préambule est utilisée pour réaliser une détection de trame de rafale, une commande de gain automatique, une synchronisation de temps grossière et/ou une synchronisation de séquence grossière dudit signal de commutation sans fil.

17. Procédé selon la revendication 15 ou 16,
dans lequel ledit intervalle de garde (44a, 44b, 44c) comprend au moins une séquence PN (40a), ladite au moins une séquence PN (40a) étant identique à ladite au moins une séquence PN (111) dudit préambule (110), où ladite au moins une séquence PN de l'intervalle de garde est corrélée afin d'obtenir une fonction de corrélation, où ladite fonction de corrélation est utilisée pour effectuer une estimation et/ou une égalisation de canal dudit signal de communication sans fil.

18. Procédé selon l'une des revendications 15 à 17, comprenant en outre la détection d'un pic de corrélation (53a, 53b, 53c) dans ladite ou lesdites fonctions de corrélation.

19. Procédé selon l'une des revendications 15 à 19, dans lequel ladite trame de rafale (101) comprend au moins deux intervalles de garde (44a, 44b, 44c) avec des séquences PN respectives et au moins deux séquences PN dans ledit préambule (100), où les informations de temps sont détectées à partir des fonctions de corrélation desdites au moins deux séquences PN du préambule (100) et des fonctions de corrélation des séquences PN des intervalles de garde.

20. Procédé selon la revendication 19, dans lequel une durée prédéterminée entre les fonctions de corrélation desdites au moins deux séquences PN du préambule identifie la présence d'un préambule.

21. Procédé selon la revendication 19 ou 20, dans lequel une durée prédéterminée entre les fonctions de corrélation desdites séquences PN des intervalles de garde identifie la présence d'un cadre de données (42a, 42b, 42c).

22. Procédé selon l'une des revendications 15 à 21, dans lequel ledit préambule (100) comprend une pluralité de séquences PN (111a, 111 b, 111c), où une détection d'une variation des durées entre les fonctions de corrélation desdites séquences PN du préambule (100) est effectuée afin d'obtenir des informations de commande.

23. Processeur de signal opérationnel pour traiter un signal de communication sans fil monoporteuse reçu, dans lequel ledit signal de communication est basé sur une structure de cadre temporel avec des trames de rafale (101), chaque trame de rafale comprenant au moins une combinaison d'un intervalle de garde (44a, 44b, 44c) et un cadre de données (42a, 42b, 42c), et un préambule (100) précédant ladite combinaison, ledit préambule (100) et ledit intervalle de garde (44a, 44b, 44c) comprenant au moins une séquence de bruit pseudo-aléatoire, PN (111, 40a), ledit processeur comprenant un module de corrélation opérationnel pour corréler au moins une partie de ladite au moins une séquence PN (111) du préambule (100) et pour fournir en sortie une fonction de corrélation, où ladite au moins une séquence PN (40a) de l'intervalle de garde (44a) est identique à ladite au moins une séquence PN (111) du préambule (100).

24. Processeur de signal selon la revendication 23, dans lequel ledit processeur de signal est opérationnel pour utiliser ladite fonction de corrélation provenant de ladite au moins une séquence PN (111) du préambule (100) pour effectuer une détection de trame de rafale, une commande de gain automatique, une synchronisation de temps grossière et/ou une synchronisation de séquence grossière dudit signal de commutation sans fil.

25. Processeur de signal selon la revendication 23 ou 24, dans lequel ledit intervalle de garde comprend au moins une séquence PN, ladite au moins une séquence PN étant identique à ladite au moins une séquence PN dudit préambule, où ledit module de corrélation est opérationnel pour corréler ladite au moins une séquence PN (40a) de l'intervalle de garde (44a) afin d'obtenir une fonction de corrélation, où ledit processeur de signal est opérationnel pour utiliser ladite fonction de corrélation pour effectuer une estimation et/ou une égalisation de canal dudit signal de communication sans fil.

26. Processeur de signal selon l'une des revendications 23 à 25, comprenant en outre un module de détection opérationnel pour détecter un pic de corrélation dans ladite ou lesdites fonctions de corrélation.

27. Processeur de signal selon l'une des revendications 23 à 26, dans lequel ladite trame de rafale (101) comprend au moins deux intervalles de garde (44a, 44b) avec des séquences PN respectives (40a, 40b) et au moins deux séquences PN dans ledit préambule (100), où ledit processeur de signal est opérationnel pour détecter les informations de temps à partir des fonctions de corrélation desdites au moins deux séquences PN du préambule et des fonctions de corrélation des séquences PN des intervalles de garde.

28. Processeur de signal selon la revendication 27, dans lequel une durée prédéterminée entre les fonctions de corrélation desdites au moins deux séquences PN (111a, 111b) du préambule (100) identifie la présence d'un préambule.

29. Processeur de signal selon la revendication 27 ou 28, dans lequel une durée prédéterminée entre les fonctions de corrélation desdites séquences PN (40a) des intervalles de garde (44a) identifie la présence d'un cadre de données (42a).

30. Processeur de signal selon l'une des revendications 23 à 29,
dans lequel ledit préambule (100) comprend une pluralité de séquences PN (111 a, 111 b), où ledit processeur de signal est opérationnel pour effectuer une détection d'une variation des durées entre les fonctions de corrélation desdites séquences PN du préambule afin d'obtenir des informations de commande.

**Fig. 1**

| 10a | 12a | 11a | 10b | 12b | 11b | 10c | 12c | 11c |

Data frame 1  Data frame 2  Data frame 3

Cyclic prefix — one FFT frame — Cyclic prefix — one FFT frame — Cyclic prefix — one FFT frame

14a  14b  13  14c

**Fig. 2**

20 Modulator → 21 Inverse FFT → 22 insertion → 23 TxRF → 35

36 → 24 RxRF → 25 Remove → 26 FFT → 27 Channel equalizer → 29 demodulator

28 Channel estimation

33  34

**Fig. 3**

120 Modulator → 122 insertion → 123 TxRF → 135

136 → 124 RxRF → 125 Remove → 126 FFT → 127 Channel equalizer → 121 Inverse FFT → 129 demodulator

128 Channel estimation

31  32

Fig. 4

Fig. 5

Fig. 6

EP 2 099 187 B1

**Fig. 7**

**Fig. 8**

Fig. 9

Fig. 10

23

43b

40a | Data frame 1 | 42a | 40b | Data frame 2 | 42b | 40c | Data frame 3 | 42c | 40d

44a — sequence | 44b — sequence | 44c — sequence | sequence

g.i. | one FFT frame | g.i. | one FFT frame | g.i. | one FFT frame

53a — FFT window for data frame 1

53b — FFT window for data frame 2

53c — FFT window for data frame 3

51 | 52

Fig. 11

**Fig. 12**

53 — Channel transfer function (time domain)

65 — FFT → Channel transfer function (frequency domain)

62 — SNR estimation

63 — FFT ← Data frame

64 — MMSE channel equalization

**Fig. 13**

53 — Channel transfer function (time domain)

61 — DFT → Channel transfer function (frequency domain)

62 — SNR estimation

63 — FFT ← Data frame

64 — MMSE channel equalization

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060140293 A
- US 20070195914 A